# EUROPÄISCHE PATENTSCHRIFT

(11) **EP 0 755 498 B1**
(45) Veröffentlichungstag und Bekanntmachung des Hinweises auf die Patenterteilung: **13.01.1999**
(21) Anmeldenummer: 95915737.1
(22) Anmeldetag: 04.05.1995
(51) Int. Cl.: F24J 3/08, E21B 43/04, E21B 36/00, E21B 43/08

(54) **ANLAGE ZUM AUSTAUSCH VON ENERGIE ZWISCHEN ERDREICH UND EINEM ENERGIETAUSCHER**
FACILITY FOR EFFECTING ENERGY EXCHANGE BETWEEN THE GROUND AND AN ENERGY EXCHANGER
INSTALLATION POUR L'ECHANGE D'ENERGIE ENTRE LE SOL ET UN ECHANGEUR D'ENERGIE

(30) Priorität: 06.05.1994 CH 1431/94
(43) Veröffentlichungstag der Anmeldung: 29.01.1997
(73) Patentinhaber: GEOHIL AG, 6331 Hünenberg (CH)
(72) Erfinder: HILDEBRAND, Hans, CH-6340 Baar (CH)
(74) Vertreter: Schmauder, Klaus Dieter
(86) Internationale Anmeldenummer: CH9500101
(87) Internationale Veröffentlichungsnummer: WO9530864

(56) Entgegenhaltungen:
- EP-A- 0 499 466
- GB-A- 2 058 334

## Beschreibung

Die Erfindung betrifft eine Anlage gemäss Oberbegriff des Anspruches 1.

Anlagen der eingangs genannten Art sind mehrfach bekannt, so beispielsweise aus der EP-PS 0 386 176. Ein solches offenes, das heisst druckloses System, bei dem also die Vorlaufleitung und die Rücklaufleitung eines Erdwärmetauschers kein geschlossenes Rohrleitungssystem bilden, hat sich sehr gut bewährt. Bei lockeren geologischen Schichten oder verschmutztem Wasser besteht die Gefahr, dass sich der Rücklaufbereich und insbesondere auch der Bereich der Eintrittsöffnungen in das Trennrohr zusetzen, so dass eine Zirkulation des Rücklaufwassers mit dem Vorlauf nicht mehr möglich oder zumindest erschwert ist.

Aufgabe der Erfindung ist es, eine Anlage der eingangs genannten Art weiter zu verbessern, so dass der Wasserkreislauf gewährleistet ist.

Diese Aufgabe wird gelöst durch die kennzeichnenden Merkmale des Anspruches 1. Dadurch, dass das Trennrohr mit Abstand vom Grund des Bohrloches endet und seitliche Austrittsöffnungen der Rücklaufrohre mindestens unterhalb des Endes des Trennrohres angeordnet sind, wobei das Bohrloch vom Grund bis mindestens zur Höhe über den seitlichen Eintrittsöffnungen des Trennrohres mit der porösen Füllung versehen ist, wird erreicht, dass der Bereich, in dem das Rücklaufwasser vom Rücklaufrohr austritt, sich an der Umgebung erwärmt und in die Eintrittsöffnungen des Trennrohres eintritt, weitgehend frei ist von Sedimenten oder sonstigen Verunreinigungen, da die poröse Füllung ja frei von solchen Sedimenten und Verunreinigungen in das Bohrloch eingebracht werden kann. Somit wird auch bei ungünstigen geologischen Verhältnissen und/oder bei einem mit Schwemmstoffen verunreinigten Grundwasser der Wasserkreislauf dennoch sichergestellt. Die Anlage ist insbesondere für Erdwärmetauscher geeignet, die nicht sehr tief, beispielsweise bis 100 m ins Erdreich geführt werden. Für solche Anlagen waren bisher zwei mit Abstand voneinander angeordnete Erdwärmetauscher notwendig. Mit der erfindungsgemässen Lösung ist also nur noch ein Erdwärmetauscher erforderlich und die Einspeisung des Rücklaufwassers an tiefer Stelle vermeidet eine Grundwasserabsenkung durch hydraulisches Kurzschliessen.

Vorteilhafte Ausgestaltungen der Erfindung sind in den abhängigen Ansprüchen 2 bis 6 beschrieben.

Die poröse Füllung kann an sich bis dicht an die Erdoberfläche geführt sein, vorteilhafter ist jedoch eine Ausgestaltung nach Anspruch 2, wobei die Sperrschicht das Eindringen von Grundwasser in den Bereich der porösen Füllung wenigstens verzögert. Vorteilhaft ist eine Weiterbildung nach Anspruch 3, welche die Sperrschicht weiter abdichtet.

Auch die Weiterbildung der Anlage nach Anspruch 4 verhindert eine Verunreinigung der porösen Füllung und damit der angrenzenden Bauteile, da das Rohr ein Lösen von Sedimenten aus der Wandung des Bohrloches verhindert. Gleichzeitig wird auch das Eindringen von Grundwasser aus den oberen Schichten vermieden. Das Rohr kann beispielsweise aus Kunststoff hergestellt sein, vorzugsweise ist es jedoch nach Anspruch 5 ausgebildet.

Für die Ausbildung der porösen Füllung ergeben sich die verschiedensten bekannten Möglichkeiten, wobei eine Ausgestaltung nach Anspruch 6 besonders bevorzugt ist.

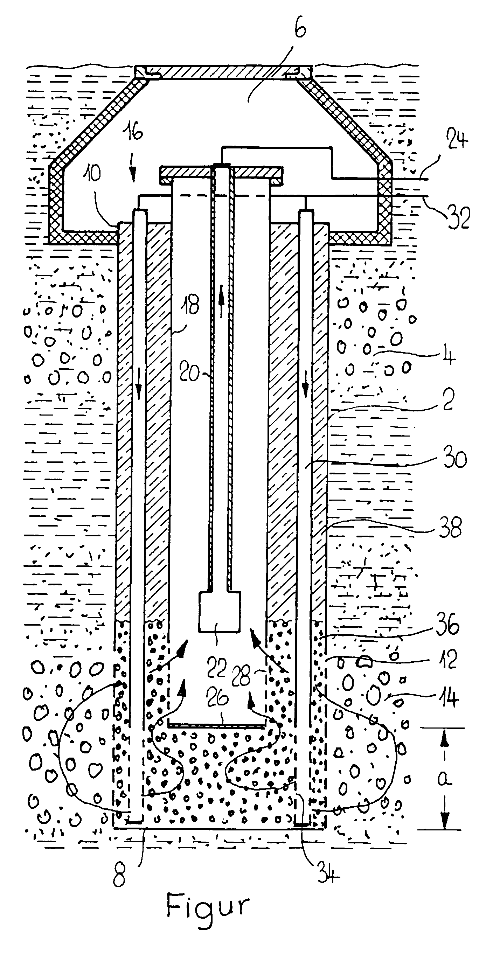

Ein Ausführungsbeispiel der erfindungsgemässen Anlage wird nachfolgend anhand einer Zeichnung näher beschrieben, wobei die einzige Figur einen vertikalen Schnitt durch einen Erdwärmetauscher zeigt.

Der in der Zeichnung dargestellte Erdwärmetauscher ist in einem Bohrloch 2 angeordnet, welches im Erdreich 4 eingebracht ist und am oberen Ende in einen Schacht 6 mündet. Das Bohrloch 2 ist bis an den Grund 8 mit einem vorzugsweise aus Stahl bestehenden Rohr 10 ausgekleidet, welches ein Eindringen von Umgebungsmaterial in das Bohrloch verhindert. Im unteren, vorzugsweise Kies haltigen Bereich des Erdreiches ist das Rohr mit Durchbrüchen 12 versehen, welche die Verbindung zwischen der umgebenden Kiesschicht 14 und dem Inneren des Rohres 10 herstellt.

Radial nach innen fortschreitend schliesst sich an das Rohr 10 ein Rücklaufbereich 16 an, der nach innen von einem Trennrohr 18 aus Kunststoff begrenzt ist, welches ein Vorlaufrohr 20 aus einem isolierenden Kunststoffrohr, einem sogenannten Thermorohr aufnimmt, an dessen unterem Ende eine Pumpe 22 angeordnet ist. Das Vorlaufrohr 20 geht in dem Schacht 6 in eine Vorlaufleitung 24 zu einem nicht näher dargestellten Energietauscher (beispielsweise gemäss der EP-PS 0 386 176) über. Das untere Ende 26 des Trennrohres 18 ist mit Abstand a von beispielsweise 1 bis 50 m vom Grund 8 des Bohrloches 2 angeordnet. Im unteren Bereich enthält das Trennrohr 18 Eintrittsöffnungen 28 zum Eintritt von erwärmtem Vorlaufwasser aus der Umgebung und zur Zuführung zur Pumpe 22.

Im Rücklaufbereich 16 sind mehrere am Umfang verteilte Rücklaufrohre 30 angeordnet, die am oberen Ende mit einer Rücklaufleitung 32 verbunden sind, welche in bekannter Weise von einem Energietauscher kommt. Die Rücklaufrohre 30 reichen bis an den Grund 8 des Bohrloches 2 und sind mindestens unterhalb des Endes 26 des Trennrohres 18 mit Austrittsöffnungen 34 versehen. Der unter Bereich des Bohrloches ist mindestens bis zur Höhe über den seitlichen Eintrittsöffnungen 28 des Trennrohres 18 mit einer porösen Füllung 36, beispielsweise einem Kies der Körnung 2 bis 8 mm ausgefüllt. Oberhalb der porösen Füllung 36 ist der Rücklaufbereich mit einer Sperrschicht 38 ausgefüllt, die beispielsweise aus Tonmaterial besteht und bis an den oberen Rand des Bohrloches 2 reicht.

Das aus den Rücklaufrohren 30 über die Austrittsöffnungen 34 austretende Rücklaufwasser gelangt somit in die poröse Füllung 36, gegebenenfalls durch die Durchbrüche 12 im Rohr 10 in die umgebende Kiesschicht 14, erwärmt sich dort und steigt nach oben, wobei das erwärmte Rücklaufwasser durch die Durchbrüche 12 wieder in die poröse Füllung 36 gelangt. Aus der porösen Füllung 36 strömt das erwärmte Rücklaufwasser zur Pumpe 22 und wird durch das Vorlaufrohr 20 und die Vorlaufleitung 24 zum nicht näher dargestellten Energietauscher gefördert.

Die im Ausführungsbeispiel dargestellte Lösung ist beispielsweise für Erdwärmetauscher bis zu 100 m Tiefe geeignet, wobei das untere Ende 26 des Trennrohres beispielsweise in einer Tiefe von 40 bis 70 m angeordnet sein kann und die poröse Füllung 36 in einer Tiefe von 10 bis 30 m beginnen kann. Selbstverständlich sind auch andere Grössenverhältnisse des Erdwärmetauschers möglich.

### BEZUGSZEICHENLISTE

- a: Abstand
- 2: Bohrloch
- 4: Erdreich
- 6: Schacht
- 8: Grund
- 10: Rohr
- 12: Durchbruch
- 14: Kiesschicht
- 16: Rücklaufbereich
- 18: Trennrohr
- 20: Vorlaufrohr
- 22: Pumpe
- 24: Vorlaufleitung von 18
- 26: unteres Ende
- 28: Eintrittsöffnung
- 30: Rücklaufrohr
- 32: Rücklaufleitung
- 34: Austrittsöffnung
- 36: poröse Füllung
- 38: Sperrschicht

## Patentansprüche

1. Anlage zum Austausch von Energie zwischen Erdreich und einem Energietauscher, mit einem Erdwärmetauscher, der ein wärmeisolierendes Vorlaufrohr (24) mit einer in einem Bohrloch (2) angeordneten Pumpe (22) enthält, wobei das Vorlaufrohr (24) und die Pumpe (22) im Bohrloch (2) von einem Trennrohr (18) umgeben sind, an das sich radial nach aussen ein Rücklaufbereich (16) für Rücklaufwasser anschliesst, der mit dem Energietauscher in Verbindung stehende Rücklaufrohre (30) und eine poröse Füllung (36) enthält, wobei die Rücklaufrohre (30) am Grund (8) des Bohrloches (2) münden und über seitliche Eintrittsöffnungen (28) im Trennrohr (18) mit dem Innern des Trennrohres in Verbindung stehen, dadurch gekennzeichnet, dass das Trennrohr (18) mit Abstand (a) vom Grund (8) des Bohrloches (2) endet und seitliche Austrittsöffnungen (34) der Rücklaufrohre (30) mindestens unterhalb des Endes (26) des Trennrohres (18) angeordnet sind, wobei das Bohrloch (2) vom Grund (8) bis mindestens zur Höhe über den seitlichen Eintrittsöffnungen (28) des Trennrohres (18) mit der porösen Füllung (36) ausgefüllt ist.

2. Anlage nach Anspruch 1, dadurch gekennzeichnet, dass über der porösen Füllung (36) eine den Rücklaufbereich (16) ausfüllende und die Rücklaufrohre (30) einschliessende Sperrschicht (38) vorhanden ist.

3. Anlage nach Anspruch 1 oder 2, dadurch gekennzeichnet, dass die Sperrschicht (38) mindestens aus Ton besteht.

4. Anlage nach einem der Ansprüche 1 bis 3, dadurch gekennzeichnet, dass die Wandung des Bohrloches (2) mit einem Rohr (10) versehen ist, welches im Bereich der porösen Füllung (36) mit Durchbrüchen (12) versehen ist.

5. Anlage nach Anspruch 4, dadurch gekennzeichnet, dass das Rohr (10) aus Metall, vorzugsweise Stahl, besteht.

6. Anlage nach einem der Ansprüche 1 bis 4, dadurch gekennzeichnet, dass die poröse Füllung (36) aus Kies vorzugsweise der Körnung von 2 bis 8 mm besteht.

## Claims

1. An installation for the exchange of energy between the soil and an energy exchanger, comprising a soil heat exchanger having a thermo-insulated supply flow pipe (24) provided with a pump (22) arranged in a borehole (2) formed in ground, the supply flow pipe (24) and the pump (22) being surrounded within the borehole (2) by a shroud pipe (18), adjacent to which a return flow region (16) for return water is located radially outwardly thereof and comprised of return flow pipes (30) connected with the energy exchanger and of a porous filling (36), the return flow pipes (30) leading into the bottom (8) of the borehole (2) and communicating with the interior of the shroud pipe by means of lateral inlet openings (28) provided at the shroud pipe (18), characterized in that the shroud pipe (18) has an end spaced (a) from the bottom (8) of the borehole (2) and that lateral outlet openings (34) of the return flow pipes (30) are arranged at least beneath the end (26) of the shroud pipe (18), the borehole (2) being filled with the porous filling (36) from the bottom (8) at least up to a level above the lateral inlet openings (28) of the shroud pipe (18).

2. An installation according to claim 1, characterized in that there is provided above the porous filling (36) a barrier layer (38) that fills the return flow region (16) and surrounds the return flow pipes (30).

3. An installation according to claim 1 or 2, characterized in that the barrier layer (38) is formed at least of clay.

4. An installation according to any one of claims 1 to 3, characterized in that the wall of the borehole (2) is provided with a pipe (10) having breakthroughs (12) located in the region of the porous filling (36).

5. An installation according to claim 4, characterized in that the pipe (10) is made of metal, preferably of steel.

6. An installation according to any one of claims 1 to 4, characterized in that the porous filling (36) is formed of gravel preferably having a size from 2 to 8 mm.

## Revendications

1. Installation d'échange d'énergie entre le sol et un échangeur d'énergie, comportant un échangeur de chaleur du sol pourvu d'un tube d'amenée (24) thermiquement isolé avec une pompe (22) disposée dans un puits (2) foré dans le sol, le tube d'amenée (24) et la pompe (22) étant entourés au sein du puits (2) d'un tube de chemisage (18) auquel est adjacente, radialement vers l'extérieur, une région de retour d'écoulement (16) destinée à la circulation d'eau en retour qui comporte des tubes de retour d'écoulement (30) en communication avec l'échangeur d'énergie ainsi qu'un remplissage poreux (36), les tubes de retour d'écoulement (30) débouchant au fond (8) du puits (2) et communiquant avec l'intérieur du tube de chemisage au moyen d'ouvertures d'amenée latérales (28) pratiquées dans le tube de chemisage (18), caractérisée en ce que le tube de chemisage (18) se termine à distance (a) du fond (8) du puits (2) et que des ouvertures de sortie latérales (34) des tubes de retour d'écoulement (30) sont disposées au moins plus bas que l'extrémité (26) du tube de chemisage (18), le puits (2) étant rempli du remplissage poreux (36) depuis le fond (8) au moins jusqu'à un niveau situé au-dessus des ouvertures d'amenée latérales (28) du tube de chemisage (18).

2. Installation selon la revendication 1, caractérisée en ce qu'il est prévu au-dessus du remplissage poreux (36) une couche barrière (38) qui remplit la région de retour d'écoulement (16) et entoure les tubes de retour d'écoulement (30).

3. Installation selon la revendication 1 ou 2, caractérisée en ce que la couche barrière (38) est au moins en d'argile.

4. Installation selon l'une des revendications 1 à 3, caractérisée en ce que la paroi du puits (2) est pourvue d'un tube (10) comportant des lumières (12) disposées dans la région du remplissage poreux (36).

5. Installation selon la revendication 4, caractérisée en ce que le tube (10) est en métal, de préférence en acier.

6. Installation selon l'une des revendications 1 à 4, caractérisée en ce que le remplissage poreux (36) est fait de gravier de préférence d'une taille comprise entre 2 et 8 mm.
